# EUROPEAN PATENT SPECIFICATION

(11) **EP 2 413 614 B1**
(45) Date of publication and mention of the grant of the patent: **18.06.2014**
(21) Application number: 11161468.1
(22) Date of filing: 07.04.2011
(51) Int. Cl.: H04N 21/482, H04N 21/432, H04N 21/41, G06F 3/14, H04N 5/44, H04N 21/4147

(54) **Electronic apparatus and information processing method**
Elektronische Vorrichtung und Informationsverarbeitungsverfahren
Appareil électronique et procédé de traitement d'informations

(30) Priority: 27.07.2010 JP 2010168647
(43) Date of publication of application: 01.02.2012
(73) Proprietor: Kabushiki Kaisha Toshiba, Tokyo 105-8001 (JP)
(72) Inventor: Itakura, Toyokazu, Tokyo 105-8001 (JP); Kikuchi, Masaaki, Tokyo 105-8001 (JP); Ohmori, Yoshihiro, Tokyo 105-8001 (JP); Higuchi, Yasukazu, Tokyo 105-8001 (JP); Togashi, Yuuichi, Tokyo 105-8001 (JP)
(74) Representative: HOFFMANN EITLE

(56) References cited:
- US-A1- 2003 035 075
- US-A1- 2005 057 538
- US-B1- 6 377 228
- US-B1- 6 862 741

## Description

Embodiments described herein relate generally to an electronic apparatus for remote-controlling a video apparatus which plays back content data, and an information processing method which is applied to the electronic apparatus.

Video apparatuses, such as a TV and a hard disk recorder, which can preset recording of a broadcast program via a network, have been gaining in popularity. Such a video apparatus can preset recording of a designated broadcast program, for example, by using a terminal such as a personal computer which is connected to the video apparatus via a network. A user selects a program, which is to be recorded, for example, from a program list which is displayed on the screen of the terminal. The video apparatus receives information of the selected program via the network and then records the selected program.

When the user views a program (content data) which has been recorded by the video apparatus, the user selects the program from a list showing recorded programs. The list of recorded programs is displayed, for example, on the screen of the video apparatus or on the screen of the terminal connected via the network. The user selects the program, which is to be viewed, from the displayed list of recorded programs.

The video apparatus or terminal may display a predetermined number of items indicating programs, in accordance with the size of the screen or the size of items indicative of programs. Thus, when more than the predetermined number of programs are recorded in the recording/playback apparatus, the user finds a program to be viewed, for example, by moving items displayed on the screen by an operation of scrolling the displayed items. However, as the number of recorded programs increases, such an operation becomes more time-consuming for the user.

US 6 862 741 B1 describes a second information handling system comprising receiving EPG data from a first information handling system and displaying at least a portion of received EPG data.

US 2005/057538 A1 describes a system for displaying content data on an image display of a remote control device. The content data identifies media files stored in a media content storage device, or is associated to those media files, and contains a title of audio track and an album title, for example.

US 6 377 228 B1 describes arranging a plurality of basic display units (BDU) together within a large frame to form a display unit, and treating the display unit as a single logical display. A processor in each BDU controls what is displayed on the display in accordance with a direct user interaction via a touch-sensitive panel or keyboard attached to particular BDU, or a control signal received from other BDU coupled via a network.

The above objects are solved by the subject-matter of the independent claims. Further advantageous embodiments are defined in the dependent claims.

A general architecture that implements the various features of the embodiments will now be described with reference to the drawings. The drawings and the associated descriptions are provided to illustrate the embodiments and not to limit the scope of the invention.
FIG. 1 is an exemplary conceptual view illustrating the structure of an electronic apparatus according to an embodiment.
FIG. 2 is an exemplary block diagram illustrating the structure of the electronic apparatus of the embodiment.
FIG. 3 illustrates a structure example of content list data which is used by the electronic apparatus of the embodiment.
FIG. 4 illustrates a structure example of content classification data which is used by the electronic apparatus of the embodiment.
FIG. 5 is an exemplary view for describing an example of a content list which is displayed by the electronic apparatus of the embodiment.
FIG. 6 is an exemplary view for describing another example of the content list which is displayed by the electronic apparatus of the embodiment.
FIG. 7 is an exemplary flowchart illustrating an example of the procedure of a list display process which is executed by the electronic apparatus of the embodiment.
FIG. 8 is an exemplary flowchart illustrating another example of the procedure of the list display process which is executed by the electronic apparatus of the embodiment.

Various embodiments will be described hereinafter with reference to the accompanying drawings.

In general, according to one embodiment, an electronic apparatus which controls a video apparatus configured to display a part of a first content list including at least a part of a plurality of contents stored in a storage device, includes a reception module, a display module and a request transmission module. The reception module receives content information indicative of the plurality of contents from the video apparatus. The display module displays a part of a second content list by using the content information, the second content list including different contents from the first content list. The request transmission module transmits a playback command to the video apparatus, the playback command requesting playback of a content designated by using the second content list.

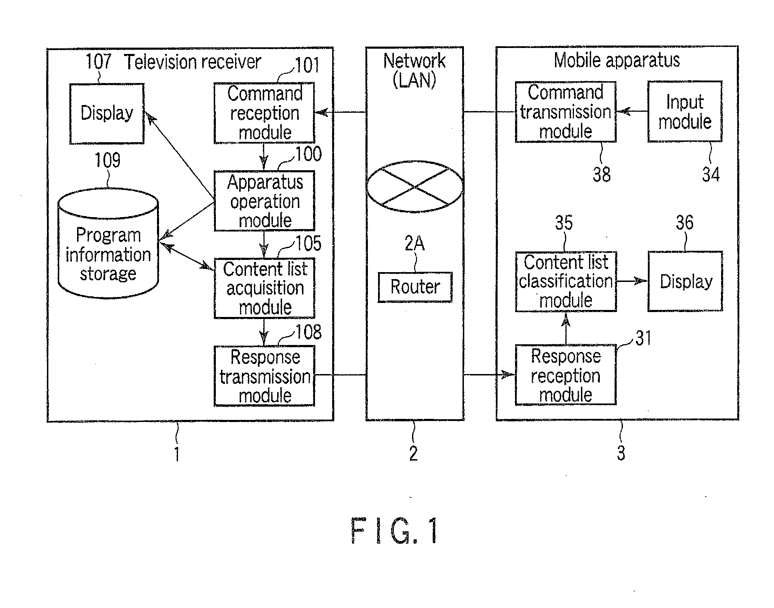

To begin with, the structure of an electronic apparatus according to an embodiment is described with reference to FIG. 1. This electronic apparatus is realized as a mobile apparatus 3 such as a mobile phone (smart phone) or a PDA. As shown in FIG. 1, the mobile apparatus 3 is connected to a television (TV) receiver 1 via a network 2 such as a local area network (LAN). The network 2 includes a network device such as a router 2A.

The TV receiver 1 is a video apparatus having a function of recording and playback content data. The TV receiver 1 has a function (recording function) of receiving and recording a designated broadcast program (content). In addition, the TV receiver 1 has a function (playback function) of playing back a program which is selected from a list (content list) of recorded programs. By this recording function or playback function, the TV receiver 1 may also receive via the network 2 information of a program which is designated with use of the mobile apparatus 3, and record or play back the broadcast program. Besides, the mobile apparatus 3 has a function of displaying, for example, a program list, and sending to the TV receiver 1 the information of the program which is designated by the user from the program list. In short, the mobile apparatus 3 has a function of remote-controlling the TV receiver 1.

The mobile apparatus 3 includes, for example, a response reception module 31, an input module 34, a content list classification module 35, a display 36, and a command transmission module 38.

The input module 34 inputs requests corresponding to operations to the respective components in accordance with the operations by the user. The input module 34 detects an operation of designating display of the content list, and then inputs a command to request the display of the content list to the command transmission module 38. The content list includes, for example, a list of contents recorded by the TV receiver 1. In addition, the input module 34 detects an operation of selecting content with use of the content list, and then inputs a command to request playback of the selected content to the command transmission module 38.

The command transmission module 38 transmits the command (a signal including an instruction), which has been input by the input module 34, to the TV receiver 1 via the network 2. The response reception module 31 receives a response which is transmitted from the TV receiver 1 via the network 2. This response includes, for example, information (content list data) indicative of a content list, and information indicative of a processing result relating to the command which has been sent to the TV receiver 1. The response reception module 31 outputs the received response to the content list classification module 35.

The content list classification module 35 applies a predetermined process to the content list by using the response which has been output by the response reception module 31. Specifically, using the content data included in the response, the content list classification module 35 generates a content list which is to be displayed on a screen (display) of the mobile apparatus 3. In addition, the content list classification module 35 executes a process for classifying a plurality of contents included in the content list. The content list classification module 35 classifies the contents according to their attributes. The attributes include, for instance, the broadcast date and time, the number of times of view, the genre, and a user who presets recording (record-programming user). The attribute may be an arbitrary one which is given by the user. The content list classification module 35 may classify the contents into folders (content folders) corresponding to the attributes. The content list classification module 35 generates content classification data indicating attributes of contents, as described above.

The content list classification module 35 generates a content list which is to be displayed on the screen, by using the content list data and content classification data. For example, the content list classification module 35 generates a content list including contents corresponding to the designated attribute. Specifically, the content list classification module 35 generates, for example, a content list indicating programs (contents) which were broadcast on a designated day of the week. The content list classification module 35 outputs the generated content list to the display module 36.

The display module 36 displays the content list which has been output by the content list classification module 35.

On the other hand, the TV receiver 1 includes an apparatus operation module 100, a command reception module 101, a content list acquisition module 105, a display 107, a response transmission module 108, and a program information storage 109. The program information storage 109 stores, for example, the content data of recorded contents and the content list data.

The command reception module 101 receives a command which is transmitted from the mobile apparatus 3 (command transmission module 38) via the network 2. The command reception module 101 outputs the received command to the apparatus operation module 100.

The apparatus operation module 100 processes the command which has been output by the command reception module 101. For example, responding to a command to request display of a content list by the mobile apparatus 3, the apparatus operation module 100 executes a process for transmitting content list data to the mobile apparatus 3 and displaying the content list on the screen (display) of the TV receiver 1. Specifically, the apparatus operation module 100 requests the content list acquisition module 105 to send the content list data to the mobile apparatus 3. The content list acquisition module 105 reads the content list data which is stored in the program information storage 109. The content list acquisition module 105 outputs the read content list data to the response transmission module 108. The response transmission module 108 outputs a response including the content list data, which has been output by the content list acquisition module 105, to the mobile apparatus 3 (response reception module 31) via the network 2.

In addition, the apparatus operation module 100 generates a content list which is to be displayed on the screen, by using the read content list data. Using the content list data, the apparatus operation module 100 generates a content list showing at least a part of plural content data stored in the program information storage 109. The apparatus operation module 100 outputs the generated content list to the display 107. The display 107 displays the content list output by the apparatus operation module 100 on the screen.

Furthermore, for example, responding to a command to request playback of content by the mobile apparatus 3, the apparatus operation module 100 executes a process for playing back the content. The apparatus operation module 100 reads, from the program information storage 109, the content data corresponding to the content designated in the mobile apparatus 3. The apparatus operation module 100 generates a video signal by playing back the read content data, and then outputs the video signal to the display 107. The display 107 displays video corresponding to the video signal on the screen. By the same process, the apparatus operation module 100 also executes a process of playing back content which is selected by using the content list displayed on the screen of the TV receiver 1.

By the above-described structure, the content that is to be played back by the TV receiver 1 can be selected by using either the content list (first content list) displayed on the screen of the TV receiver 1 or the content list (second content list) displayed on the screen of the mobile apparatus 3. In the present embodiment, the first content list and second content list are made to have different contents, thereby facilitating the selection of content by the user. A description will be given below of the method of displaying content lists of different contents on the TV receiver 1 and mobile apparatus 3.

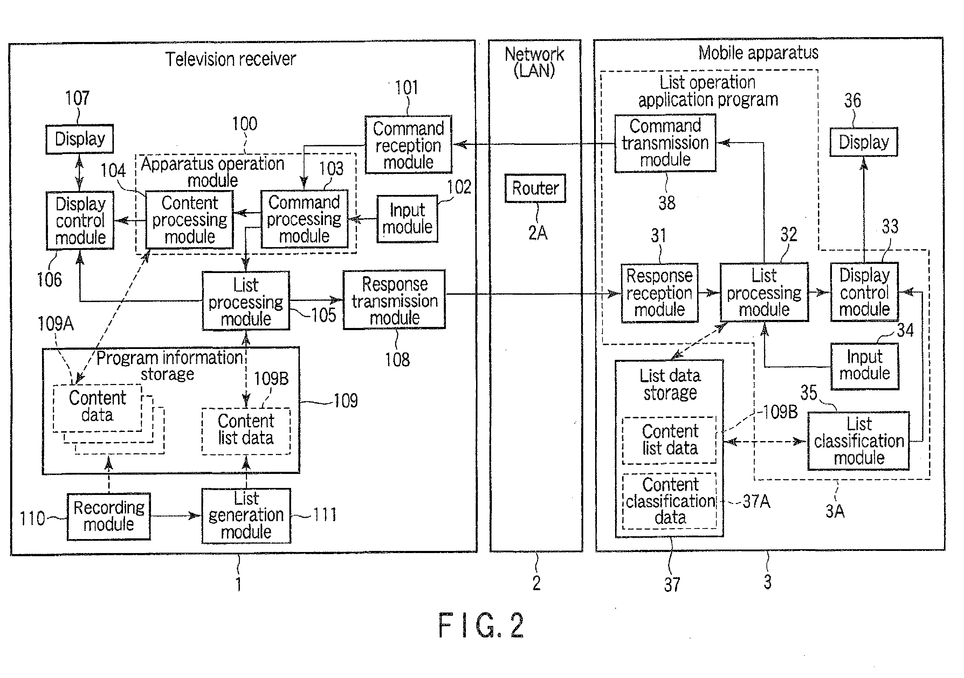

FIG. 2 is a block diagram showing detailed structures of the TV receiver 1 and mobile apparatus 3. The TV receiver 1 has, as described above, the function of recording and playing back designated content. The content to be recorded or played back can be selected by using either the TV receiver 1 or mobile apparatus 3. Specifically, the mobile apparatus 3 has a function of remote-controlling the TV receiver 1.

The TV receiver 1 includes a command reception module 101, an input module 102, a command processing module 103, a content processing module 104, a list processing module 105, a display control module 106, a display 107, a response transmission module 108, a program information storage 109, a recording module 110, and a list generation module 111.

To begin with, a description is given of the function of recording content by the TV receiver 1. The recording module 110 records a broadcast program which is designated by the user to store content data 109A of the broadcast program (content) in the program information storage 109. Then, the recording module 110 notifies the list generation module 111 that the new content has been recorded.

Responding to the notification by the recording module 110, the list generation module 111 generates content list data 109B corresponding to the content data 109A. The list generation module 111 generates the content list data 109B, for example, by making use of metadata such as program information which is added to the content data 109A. The list generation module 111 stores the content list data 109B in the program information storage 109.

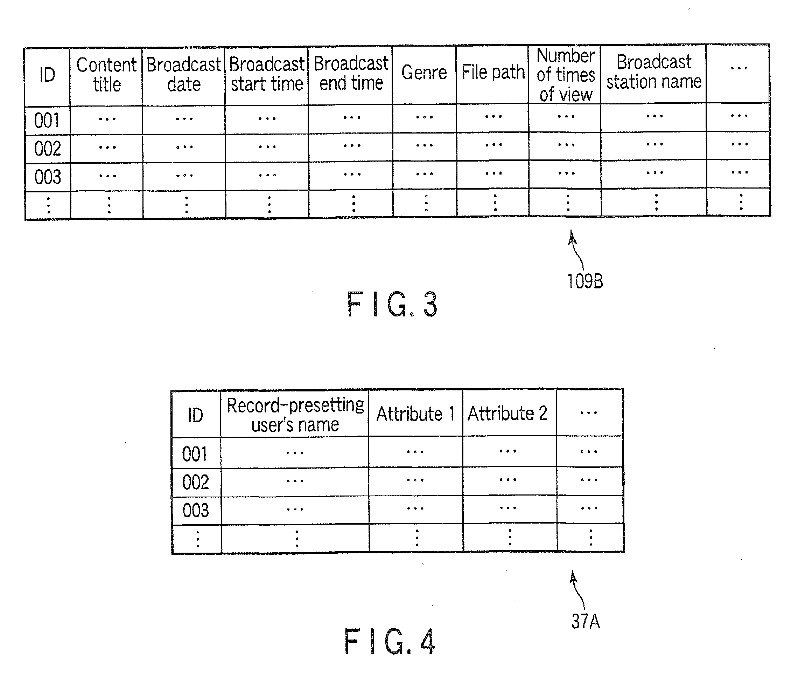

FIG. 3 shows a structure example of the content list data 109B. The content list data 109B includes a plurality of entries corresponding to plural content data 109A recorded by the TV receiver 1. Each of the entries includes, for instance, an ID, a content title, a broadcast date, a broadcast start time, a broadcast end time, a genre, a file path, a number of times of view, and a broadcast station name. In the entry corresponding to certain content data, the ID indicates identification information which is unique to the content data. The content title indicates the title, such as a program title, corresponding to the content data. The broadcast date indicates the date on which the content data was broadcast. The broadcast start time indicates the time at which the broadcast of the content data was started. The broadcast end time indicates the time at which the broadcast of the content data was ended. The file path indicates the location at which the content data is stored. The number of times of view indicates the number of times of view (playback) of the content data. The broadcast station name indicates the name of the broadcast station which broadcasts the content data.

Next, a description is given of the function of playing back the content data 109A by the TV receiver 1. The TV receiver 1 plays back the content data 109A which has been selected on the TV receiver 1, or the content data 109A which has been selected with use of the mobile apparatus 3. The content data 109A, which is a target of playback, is selected, for example, by using either the content list displayed on the display 107 of the TV receiver 1 or the content list displayed on the display 36 of the mobile apparatus 3. The content list is a list of contents (content data 109A) recorded by the TV receiver 1. The content list is displayed, for example, by the transmission of a request command (signal) for requesting display of the content list from the mobile apparatus 3.

The command reception module 101 of the TV receiver 1 receives the request command to request the display of the content list from the mobile apparatus 3 via the network 2. The command reception module 101 outputs the received signal to the command processing module 103.

The command processing module 103 requests the list processing module 105 to execute a process for displaying the content list, in response to the signal which has been output by the command reception module 101 to request the display of the content list.

Responding to the request by the command processing module 103, the list processing module 105 reads the content list data 109B which is stored in the program information storage 109. Using the read content list data 109B, the list processing module 105 generates a content list (hereinafter also referred to as "first content list") which is displayed on the screen of the display 107. Using the content list data 109B, the list processing module 105 generates a first content list showing at least a part of plural content data stored in the program information storage 109. The list processing module 105 generates, for example, a first content list in which a plurality of contents are arranged based on a predetermined structure (folder structure). For example, the list processing module 105 generates a first content list in which a plurality of contents are arranged based on the broadcast date, genre, etc. included in the content list data 109B. The list processing module 105 outputs the generated first content list to the display control module 106. The display control module 106 displays the first content list, which has been generated by the list processing module 105, on the screen of the display 107.

In addition, the list processing module 105 outputs the read content list data 109B to the response transmission module 108. The response transmission module 108 transmits the content list data 109B to the mobile apparatus 3 (response reception module 31). In the meantime, the list processing module 105 may transmit, together with the content list data 109B, structure information indicative of the structure of the first content list (the attribute used in generating the first content list) displayed on the display 107, to the mobile apparatus 3. For example, the list processing module 105 transmits to the mobile apparatus 3 the structure information indicating that the first content list is displayed based on "genre".

It may be assumed that contents (items) of a partial range included in the first content list are displayed on the screen of the display 107. In other words, only a predetermined number of items indicative of contents are displayed on the display 107 in accordance with the size of the screen or the sizes of items indicative of contents. Thus, when more than the predetermined number of contents are included in the first content list, the user moves the items displayed on the screen, for example, by an operation of scrolling the displayed items, and then finds a content that is a target of view from the first content list. The list processing module 105 transmits display range information indicative of a range of items in the first content list, which are displayed on the screen, to the mobile apparatus 3 via the response transmission module 108.

The input module 102 detects an operation by the user, and then outputs a signal indicative of the detected operation to the command processing module 103. The input module 102 detects an operation of selecting a content which is a target of playback, by using the content list displayed on the display 107. The input module 102 outputs a signal requesting the playback of the selected content to the command processing module 103.

In response to the signal requesting the playback of the selected content, which has been input by the input module 102, the command processing module 103 requests the content processing module 104 to execute a process for playing back the content.

Responding to the request by the command processing module 103, the content processing module 104 reads the content data 109A, which corresponds to the content that is the target of playback, from the program information storage 109. The content processing module 104 generates a video signal by reproducing (decoding) the read content data 109A. The content processing module 104 outputs the generated video signal to the display control module 106.

The display control module 106 displays the video signal, which has been generated by the content processing module 104, on the screen of the display 107. Thereby, the user can view the content selected from the content list.

In addition, the input module 102 may detect, for example, an operation of instructing display of a content list. In this case, the input module 102 inputs a signal requesting the display of a content list to the command processing module 103. The command processing module 103, as described above, requests the list processing module 105 to execute a process for displaying the content list on the screen of the display 107.

On the other hand, the mobile apparatus 3 includes a list operation application program 3A, a display 36 and a list data storage 37. A processor, which is provided in the mobile apparatus 3 executes the list operation application program 3A which is loaded in a memory (not shown). The list operation application program 3A has a function of displaying a content list (second content list) in accordance with a request by the user, and executing a process corresponding to an operation using the content list.

The list operation application program 3A includes a response reception module 31, a list processing module 32, a display control module 33, an input module 34, a list classification module 35, and a command transmission module 38.

The input module 34 detects an operation by the user, and then inputs a signal indicative of the detected operation to the list processing module 32. The input module 34 detects, for example, an operation of instructing display of a content list. The content list includes, for example, a list of contents recorded by the TV receiver 1. In addition, the input module 34 detects an operation of selecting content by using the content list displayed on the screen of the display 36.

Responding to the signal which is input by the input module 34 (i.e. an operation detected by the input module 34), the list processing module 32 executes a process corresponding to this signal. Specifically, the list processing module 32 generates a command to request display of a content list (a command to request transmission of content list data 109B) in accordance with the operation requesting the display of the content list. In addition, responding to the operation of selecting content by using the content list displayed on the screen of the display 36, the list processing module 32 generates a command (playback command) to request playback of this content. The list processing module 32 outputs the generated command to the command transmission module 38.

The command transmission module 38 transmits a command (a signal including an instruction), which has been output by the list processing module 32, to the TV receiver 1 (command reception module 101) via the network 2.

The response reception module 31 receives a response which is transmitted from the TV receiver 1 (response transmission module 108) via the network 2. This response includes, for example, information indicative of a content list (content list data 109B) and information indicative of a processing result relating to the command which has been sent to the TV receiver 1. In addition, this response may include structure information indicative of the structure of the content list (first content list) displayed on the screen of the TV receiver 1, and display range information indicative of the range of items in the first content list, which are displayed on the screen of the TV receiver 1. The response reception module 31 outputs the received response to the list processing module 32.

Using the response received by the response reception module 31, the list processing module 32 applies a predetermined process to the content list. When the received response includes a response to the command to request the transmission of the content list data 109B, the list processing module 32 stores the content list data 109B included in this response in the list data storage module 37.

The list classification module 35 executes a process for classifying plural contents indicated in the content list, by using the content list data 109B stored in the list data storage module 37. The list classification module 35 classifies the plural contents according to the attributes of the contents. The attributes include, for instance, a user who preset recording of content (record-presetting user), an index evaluating the content (e.g. an index indicating the degree of "favorite" or "recommend"), and a keyword indicating what is the content or indicating the atmosphere of the content. The list classification module 35 classifies the contents in accordance with attributes input by the user. The list classification module 35 may classify the contents into folders corresponding to the attributes. The content list classification module 35 generates content classification data 37A indicating the attributes of the respective contents, as described above.

FIG. 4 shows a structure example of the content classification data 37A. The content classification data 37A includes a plurality of entries corresponding to plural content data 109A. Each entry includes, for example, an ID, a record-presetting user's name, and an attribute. In the entry corresponding to certain content data, the ID indicates identification information which is unique to the content data. The record-presetting user's name indicates the name of the user who preset the recording of the content data. The attribute (attribute 1, attribute 2,...) indicates the attribute corresponding to the content data. As the attribute, for example, an index indicating the degree of "favorite" of the content data, or a keyword, such as "light" or "dark", which indicates the atmosphere of the content data, may be set.

The list processing module 32 generates a content list (hereinafter also referred to as "second content list") which is to be displayed on the screen of the display 36, by using the content list data 109B and content classification data 37A. The list processing module 32 generates the second content list based on a predetermined attribute included in the content classification data 37A. For example, the list processing module 32 generates a content list based on each individual record-programming user, by using the information of the record-presetting user's name included in the content classification data 37A. By using the content classification data 37A which is generated by the list classification module 35, the list processing module 32 can generate the second content list including the contents which are different from the contents of the first content list displayed on the screen of the TV receiver 1.

In addition, the list processing module 32 generates the second content list having a different structure from the first content list, based on the structure information included in the response by the TV receiver 1. The structure information indicates the structure of the first content list displayed on the screen of the TV receiver 1. For example, if this structure information indicates that the first content list has a structure based on "genre", the list processing module 32 generates the second content list having a structure based on the "day of the week" on which the content was broadcast. Specifically, based on the broadcast date of the content list data 109B, the list processing module 32 generates the second content list in which plural contents are arranged based on the days of the week of the broadcast. By using the content list data 109B and structure information, the list processing module 32 can generate the second content list having a different structure from the first content list displayed on the screen of the TV receiver 1.

The list processing module 32 outputs the generated second content list to the display control module 33.

The display control module 33 displays the second content list, which has been output by the list processing module 32, on the screen of the display 36.

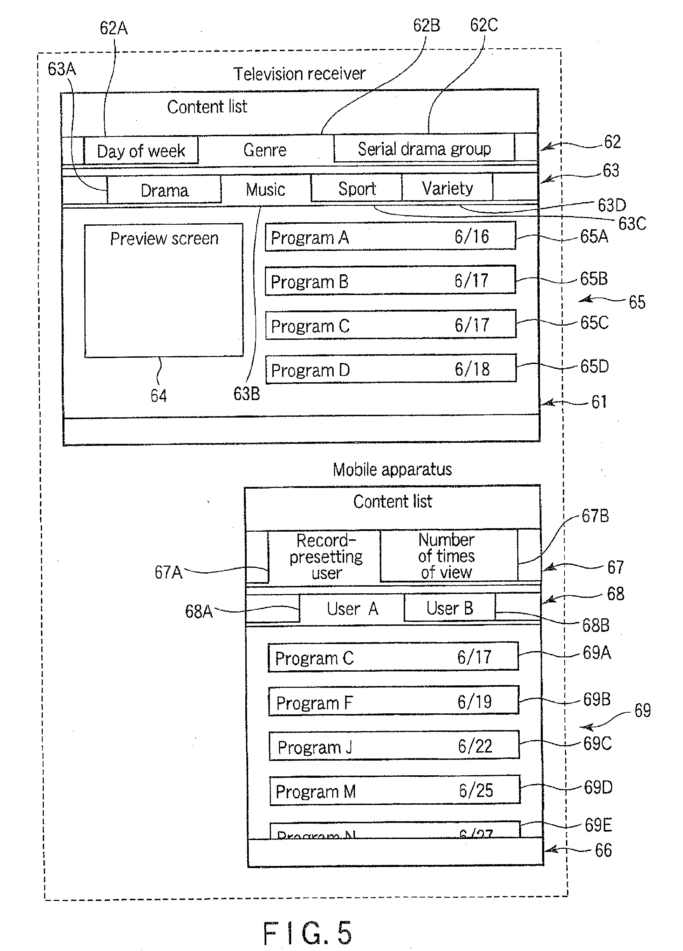

FIG. 5 shows an example of the screen including the first content list displayed by the TV receiver 1, and an example of the screen including the second content list displayed by the mobile apparatus 3. In the example shown in FIG. 5, the mobile apparatus 3 displays the second content list showing different contents from the content data included in the first content list displayed by the TV receiver 1.

A screen 61 displayed by the TV receiver 1 includes structure select buttons 62, folder select buttons 63, a preview screen 64, and content select buttons 65. The structure select buttons 62 include a button for selecting a structure (criterion) according to which content data constituting a list that is to be displayed are classified. The folder select buttons 63 include a button for selecting one of folders belonging to the structure selected by using the structure select button 62. In other words, in the folder select button 63, in response to the selection of any one of the structure select buttons 62, buttons corresponding to the folders belonging to the selected structure are displayed.

Specifically, the structure select buttons 62 include, for instance, a "day of week" button 62A, a "genre" button 62B, and a "serial drama group" button 62C. If the "day of week" button 62A has been selected, that is, if the folder structure based on the day of the week has been selected, buttons corresponding to the days of the week, such as a "Sunday" button and a "Monday" button, are displayed as the folder select buttons 63. For example, if the "Sunday" button has been selected, buttons corresponding to content data broadcast (recorded) on Sunday are displayed as the content select buttons 65A to 65D.

If the "genre" button 62B has been selected, that is, if the folder structure based on "genre" has been selected, a "drama" button 63A, a "music" button 63B, a "sports" button 63C, and a "variety" button 63D are displayed as the folder select buttons 63. For example, if the "music" button 63B has been selected, buttons corresponding to content data having the genre of "music" are displayed as the content select buttons 65.

If the "serial drama group" button 62C has been selected, that is, if the folder structure based on programs broadcast (recorded) at regular intervals has been selected, buttons corresponding to the respective programs which are broadcast at regular intervals (e.g. a "program A" button, a "program B" button, etc.) are displayed as the folder select buttons 63. The program which is broadcast at regular intervals includes, for instance, a program which is broadcast on a predetermined channel from 19:00 to 20:00 on every Monday. If "program A" button has been selected, for example, buttons corresponding to content data of the program A, which was recorded every week, are displayed as the content select buttons 65.

On the screen 61 shown in FIG. 5, the content select buttons 65 corresponding to the content data of the genre "music" are displayed since the "genre" button 62B and the "music" button 63B are selected. In each of the content select buttons 65, for example, the program title and broadcast date of the corresponding content data are displayed. For example, the content select button 65A indicates "program A" which was broadcast on "6/16" (June 16th). The preview screen 64 displays preview video of the content data corresponding to the selected content select button 65.

The structure select buttons 62 may be provided with an "all" button for displaying a list of all recorded content data, or an "unviewed" button for displaying a list of unviewed content data. In this case, since there is no need to select a folder, the folder select buttons 63 are not displayed.

On the other hand, a screen 66, which is displayed by the mobile apparatus 3, includes structure select buttons 67, folder select buttons 68, and content select buttons 69. The structure select buttons 67 include a button for selecting a structure according to which content data constituting a list that is to be displayed are classified. The folder select buttons 68 include a button for selecting one of folders belonging to the structure selected by using the structure select button 67.

Specifically, the structure select buttons 67 include, for example, a "record-presetting user" button 67A and a "number of times of view" button 67B. If the "record-presetting user" button 67A has been selected, that is, if the folder structure based on record-presetting users has been selected, buttons, such as a "user A" button 68A and a "user B" button 68B, which correspond to record-presetting users (users who preset program recording), are displayed as the folder select buttons 68. For example, if the "user A" button 68A has been selected, buttons corresponding to content data, the recording of which was preset by the user A, are displayed as the content select buttons 69.

If the "number of times of view" button 67B has been selected, that is, when the folder structure based on the number of times of view has been selected, buttons, such as a "0" button and a "1" button, which indicate the number of times of view, are displayed as the folder select buttons 68. For example, if the "0" button has been selected, buttons corresponding to content data, the number of times of view (playback) of which is zero, are displayed as the content select buttons 69. In the meantime, the folder select buttons 68 may be provided with a button indicating the range of the number of times of view, such as a "1-5".

On the screen 66 shown in FIG. 5, the content select buttons 69 corresponding to the content data, the recording of which was preset by the "user A", are displayed since the "record-presetting user" button 67A and the "user A" button 68A are selected. In each of the content select buttons 69, for example, the program title and broadcast date of the corresponding content data are displayed. For example, the content select button 69A indicates "program C" which was broadcast on "6/17" (June 17th).

As has been described above, the mobile apparatus 3 can display content lists which are classified by the structures that are different from the structures of the content lists displayed on the TV receiver 1. In other words, the content list (first content list) based on a first attribute is displayed on the TV receiver 1, and the content list (second content list) based on a second attribute is displayed on the mobile apparatus 3. In the example shown in FIG. 5, the second content list corresponding to the designated record-presetting user with use of the structure classified based on "record-presetting user" is displayed on the screen 66 of the mobile apparatus 3, while the first content list corresponding to the designated genre with use of the structure classified based on "genre" is displayed on the screen 61 of the TV receiver 1. The user easily finds a program to be viewed by using the content lists of different structures between the screen 61 of the TV receiver 1 and the screen 66 of the mobile apparatus 3. In the meantime, the content select buttons 65 and content select buttons 69 may display thumbnail images (representative images) of the corresponding content data.

In addition, the list processing module 32 generates a second content list corresponding to items in a range different from the range of the first content list, based on the display range information indicative of the range of items, which are displayed on the screen of the TV receiver 1 among items in the first content list. The display range information is included in the response from the TV receiver 1. For example, when the display range information indicates that first to fifth items of the first content list are displayed on the screen of the TV receiver 1, the list processing module 32 generates a second content list including items in a predetermined range (e.g. sixth to tenth items) following the first to fifth items. In the meantime, the list processing module 32 may generate a second content list including the same items (contents) as the first content list, and may execute such control that a predetermined range following the display range of the first content list is displayed on the screen of the mobile apparatus 3. By using the content list data 109B and the display range information, the list processing module 32 can generate the second content list showing items different from the items of the first content list which is displayed on the screen of the TV receiver 1.

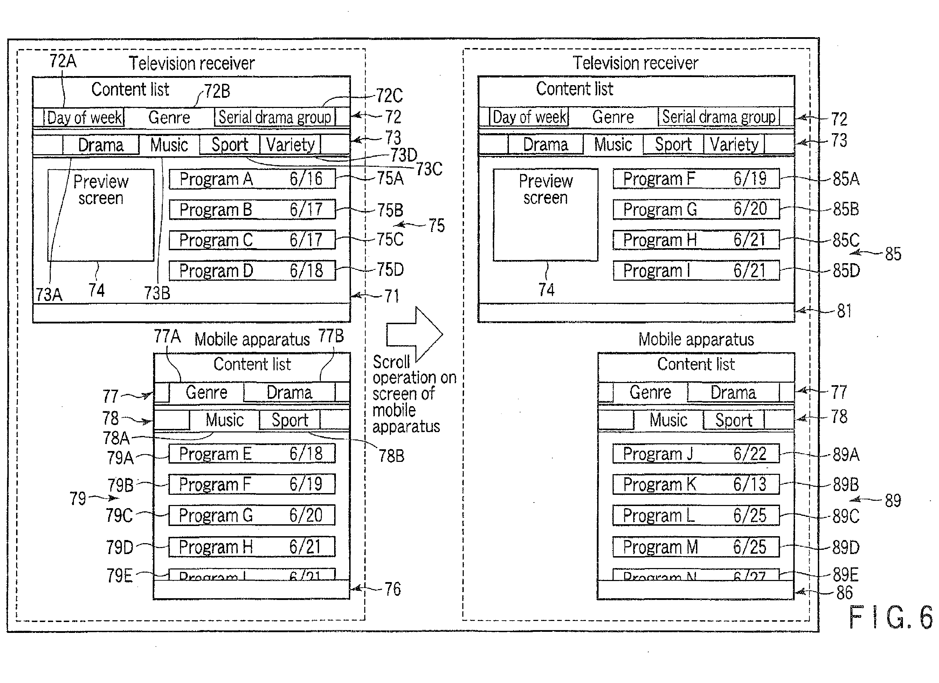

A screen 71 and a screen 76 shown in FIG. 6 relate to an example in which items following items of the first content list displayed on the screen 71 of the TV receiver 1 are displayed on the screen 76 of the mobile apparatus 3 as the second content list. Specifically, the mobile apparatus 3 displays the second content list including items in a predetermined range following the range of items which are included in the first content list of content data displayed by the TV receiver 1.

Like the screen 61 shown in FIG. 5, the screen 71 displayed by the TV receiver 1 includes structure select buttons 72, folder select buttons 73, a preview screen 74, and content select buttons 75. The content select buttons 75 corresponding to the content data of the genre "music" are displayed on the screen 71 since the "genre" button 72B is selected, and then the "music" button 73B is selected. As regards the content select buttons 75, a predetermined number of contents (items) included in the first content list are displayed on the screen 71 in accordance with the size of the region in which the content select buttons 75 are arranged and the size of each of the content select buttons 75. The screen 71 displays content select buttons 75A to 75D corresponding to first to fourth items of the first content list.

On the other hand, a screen 76, which is displayed by the mobile apparatus 3, includes structure select buttons 77, folder select buttons 78, and content select buttons 79. The content select buttons 79 corresponding to the content data of the genre "music" are displayed on the screen 76, like the screen 71, since a "genre" button 77A is selected, and then a "music" button 78A is selected. As regards the content select buttons 79, a predetermined number of items corresponding to a predetermined range following the range of items in the first content list displayed on the screen 71 are displayed on the screen 76 as the second content list. Since the screen 71 displays the content select buttons 75A to 75D corresponding to the first to fourth items (program A to program D) of the first content list, the screen 76 displays, as the second content list, content select buttons 79A to 79E corresponding to fifth to ninth items (program E to program I) of the first content list.

When the items following the items in the first content list, which are displayed on the screen of the TV receiver 1, as described above, are to be displayed on the screen of the mobile apparatus 3 as the second content list, and content is to be selected, a process is executed in which in accordance with an operation of scrolling one of the lists, the other of the lists is scrolled simultaneously with this operation.

For example, the input module 34 of the mobile apparatus 3 detects an operation of scrolling the content select buttons 79 displayed on the screen 76. Responding to the detection of the scroll operation by the input module 34, the list processing module 32 scrolls the items displayed on the screen 76, by an amount of movement of items corresponding to the scroll operation. A screen 86 shown in FIG. 6 relates to an example of a screen movement by the scroll operation. The screen 86 displays, for example, items (content select buttons 89) corresponding to a program J to a program N following the program E to program I in the second content list. In addition, the list processing module 32 outputs to the command transmission module 38 the scroll information indicative of the amount of movement of the items corresponding to the scroll operation. The command transmission module 38 transmits the scroll information to the TV receiver 1.

The command reception module 101 of the TV receiver 1 receives the scroll information which has been transmitted by the mobile apparatus 3. The command reception module 101 outputs the received scroll information to the command processing module 103.

In accordance with this scroll information, the command processing module 103 requests the list processing module 105 to execute a process of scrolling the first content list (content select buttons 75) displayed on the screen. The list processing module 105 scrolls the items displayed on the screen 71, by the amount of movement of items, which is indicated in the scroll information. A screen 81 shown in FIG. 6 relates to a screen movement corresponding to the scroll information which has been transmitted from the mobile apparatus 3. The screen 81 displays, for example, items (content select buttons 85) corresponding to the program F to program I included in a range immediately preceding the items (content select buttons 89) corresponding to the program J to program N in the first content list. Specifically, when the input module 34 of the mobile apparatus 3 has detected the operation of scrolling the content select buttons 79 displayed on the screen 76, the first content list displayed on the screen of the TV receiver 1 is scrolled simultaneously with the scroll operation on the second content list. In addition, for example, when the input module 102 of the TV receiver 1 has detected the operation of scrolling the content select buttons 75 displayed on the screen 71, the second content list can be scrolled simultaneously with the scroll operation on the first content list, like the above-described process.

The input module 34 of the mobile apparatus 3 detects the operation of selecting the content that is a target of playback, by using the content list (second content list) displayed on the display 36. The input module 34 inputs a signal requesting the playback of the selected content to the list processing module 32.

Responding to the signal requesting the playback of the selected content, which has been input by the input module 34, the list processing module 32 outputs a command (signal) requesting the playback of the content to the command transmission module 38. The command transmission module 38 transmits the command, which has been output by the list processing module 32, to the TV receiver 1 (command reception module 101).

Responding to the command to request the playback of the content, which has been transmitted by the mobile apparatus 3, as described above, the TV receiver 1 displays the video on the display 107 by playing back the content. In the meantime, responding to the command to request playback of content, which has been transmitted by the mobile apparatus 3, the list processing module 105 of the TV receiver 1 may display the first content list by scrolling the first content list to the range in which the content is displayed.

The command transmission module 38 and response reception module 31 of the mobile apparatus 3 communicate with the TV receiver 1, for example, by using a 3G module for executing 3G communication (e.g. GSM, CDMA) which is provided in the mobile apparatus 3 or a wireless LAN module for executing wireless LAN communication.

By the above-described structure, the user can easily find content which is to be viewed, by using the first content list and second content list which have different contents. The above-described TV receiver 1 may be a recording/playback apparatus such as a hard disk recorder. In this case, as the display 107, use is made of, for example, an LCD or a TV receiver, which is connected to the recording/playback apparatus.

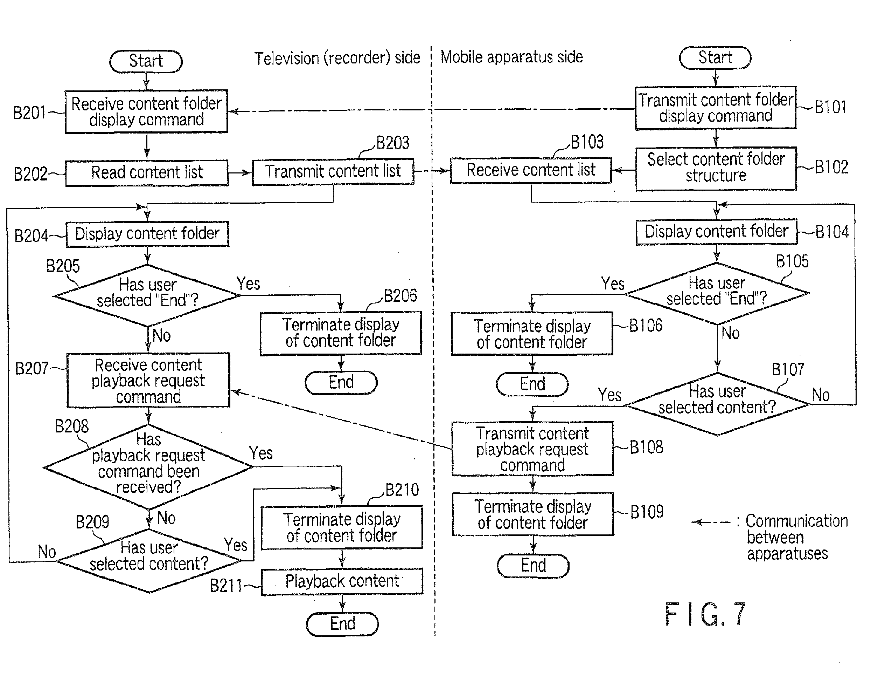

Next, referring to a flowchart of FIG. 7, a description is given of an example of the procedure of a list display process which is executed by the TV receiver 1 and mobile apparatus 3. The TV receiver 1 and mobile apparatus 3 execute the list display process according to the communication between the apparatuses via the network 2. In the list display process illustrated in FIG. 7, the TV receiver 1 displays the first content list of content data on the screen (display 107), and the mobile apparatus 3 displays on the screen (display 36) the second content list having a different structure (folder structure) from the first content list. The procedures of the respective processes in the TV receiver 1 and mobile apparatus 3 will be described below.

To start with, the command transmission module 38 of the mobile apparatus 3 transmits a command for displaying a content folder to the TV receiver 1 (block B101). The command transmission module 38 transmits the command to the TV receiver 1 in order to acquire a content list showing content data recorded by the TV receiver 1. Then, the list processing module 32 of the mobile apparatus 3 determines the structure of the content folder (block B102). The list processing module 32 determines the structure of the content folder to be, for example, a structure which is input via the input module 34, or a predetermined structure.

Subsequently, the response reception module 31 receives the content list data 109B which has been transmitted by the response transmission module 108 of the TV receiver 1 (block B103). The response reception module 31 outputs the received content list data 109B to the list processing module 32. The list processing module 32 stores the content list data 109B in the list data storage module 37. Using the content list data 109B, the list processing module 32 displays the content folder (block B104). Specifically, the list processing module 32 generates a content list, i.e. a content folder, based on the folder structure determined in block B102. The list processing module 32 outputs the generated content folder to the display control module 33. The display control module 33 displays on the display 36 the content folder which has been generated by the list processing module 32.

Then, the list processing module 32 determines whether the end of display of the content folder has been selected by the user (block B105). Specifically, the list processing module 32 determines, for example, whether a request for terminating the display of the content folder has been input from the input module 34 to the list processing module 32. If the end of display of the content folder has been selected by the user (YES in block B105), the list processing module 32 terminates the display of the content folder (block B106). Specifically, the list processing module 32 outputs to the display control module 33 a request for terminating the display of the content folder. Then, the display control module 33 terminates the display of the content folder on the display 36, and displays a predetermined screen.

If the end of display of the content folder has not been selected by the user (NO in block B105), the list processing module 32 determines whether content has been selected by the user (block B107). Specifically, the list processing module 32 determines, for example, whether a request for selecting certain content from the displayed content list has been input from the input module 34 to the list processing module 32. If no content has been selected by the user (NO in block B107), the process returns to block B104 and continues the display of the content folder.

If content has been selected by the user (YES in block B107), the list processing module 32 transmits to the TV receiver 1 a command to request playback of the selected content (block B108). Specifically, responding to the request for selecting the content, which has been input by the input module 34, the list processing module 32 generates the command to request the TV receiver 1 to play back the content. The list processing module 32 outputs the generated command to the command transmission module 38. The command transmission module 38 transmits the command, which has been generated by the list processing module 32, to the TV receiver 1.

Then, the list processing module 32 terminates the display of the content folder (block B109). Specifically, the list processing module 32 outputs to the display control module 33 a request for terminating the display of the content folder. The display control module 33 terminates the display of the content folder on the display 36, and displays a predetermined screen.

On the other hand, the command reception module 101 of the TV receiver 1 receives the command to request the display of the content folder, which has been transmitted by the command transmission module 38 of the mobile apparatus 3 (block B201). The command reception module 101 outputs the received command to the command processing module 103. The command processing module 103 processes the command, or in other words, requests the list processing module 105 to display the content folder on the display 107 and to transmit the content list data 109B to the mobile apparatus 3. Responding to the request by the command processing module 103, the list processing module 105 reads the content list data 109B from the program information storage 109 (block B202). The list processing module 105 outputs the read content list data 109B to the response transmission module 108. The response transmission module 108 transmits to the mobile apparatus 3 the content list data 109B which has been output by the list processing module 105 (block B203) .

Then, the list processing module 105 displays the content folder, using the content list data 109B (block B204). Specifically, the list processing module 105 generates a content list, i.e. a content folder, based on a predetermined folder structure. The list processing module 105 outputs the generated content folder to the display control module 106. The display control module 106 displays on the display 107 the content folder which has been generated by the list processing module 105.

Then, the list processing module 105 determines whether the end of display of the content folder has been selected by the user (block B205). Specifically, the list processing module 105 determines, for example, whether a request for terminating the display of the content folder has been input from the input module 102 to the list processing module 105. If the end of display of the content folder has been selected by the user (YES in block B205), the list processing module 105 terminates the display of the content folder (block B206). Specifically, the list processing module 105 outputs to the display control module 106 a request for terminating the display of the content folder. Then, the display control module 106 terminates the display of the content folder on the display 107, and displays a predetermined screen.

If the end of display of the content folder has not been selected by the user (NO in block B205), the command reception module 101 receives the command to request the playback of the content, which has been transmitted by the mobile apparatus 3 (block B207). The command reception module 101 outputs the received command to the command processing module 103. The command processing module 103 processes the command, or in other words, outputs to the content processing module 104 the command to request the playback of the designated content.

Then, the content processing module 104 determines whether a command to request playback of content has been received (block B208). If the command to request the playback of content has not been received (NO in block B208), the content processing module 104 determines whether content has been selected by the user (block B209). Specifically, the content processing module 104 determines, for example, whether a request for selecting certain content from the displayed content list has been output to the content processing module 104. If no content has been selected by the user (NO in block B209), the process returns to block B204 and continues the display of the content folder.

If the command to request the playback of the content has been received (YES in block B208) or if content has been selected by the user (YES in block B209), the list processing module 105 terminates the display of the content folder (block B210). Specifically, the list processing module 105 outputs to the display control module 106 a request for terminating the display of the content folder. The display control module 106 terminates the display of the content folder on the display 107. Then, the content processing module 104 plays back the designated content (block B211). In other words, the content processing module 104 plays back the content which has been designated by the command to request the playback, or the content selected by the user. Specifically, the content processing module 104 decodes the content data corresponding to the designated (selected) content, and generates a video signal. The content processing module 104 outputs the generated video signal to the display control module 106. Using the video signal generated by the content processing module 104, the display control module 106 displays the video of the designated content on the display 107.

By the above-described process, the TV receiver 1 displays the first content list on the display 107, and the mobile apparatus 3 displays on the display 36 the second content list having the structure (folder structure) which is different from the structure of the first content list. Since the user can visually recognize, at a time, the first content list and second content list having different structures, the user can easily find the content to be viewed. The TV receiver 1 plays back the content designated by using the first content list or second content list.

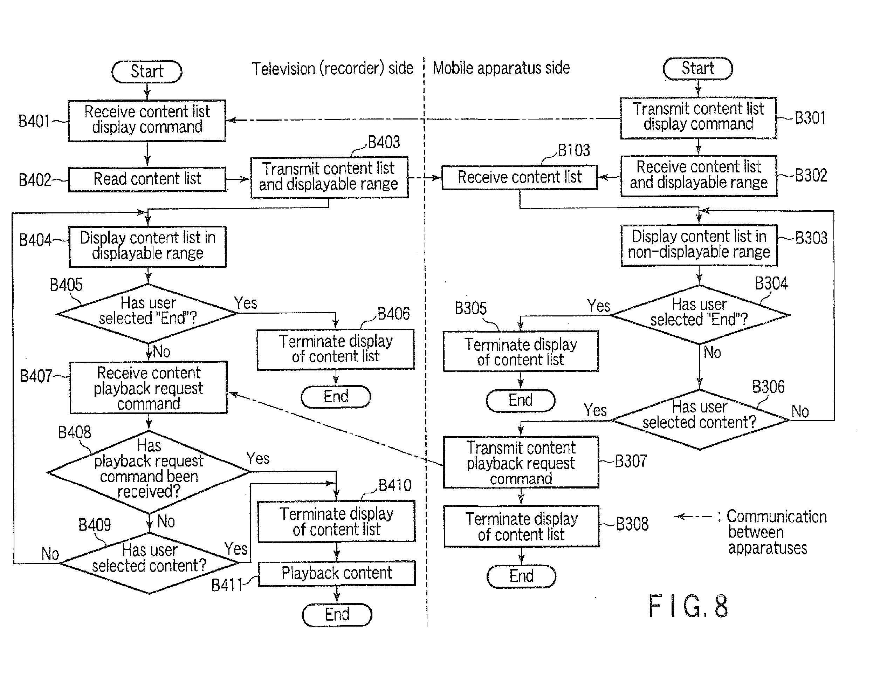

FIG. 8 is a flowchart illustrating another example of the procedure of the list display process which is executed by the TV receiver 1 and mobile apparatus 3. As described above, the TV receiver 1 and mobile apparatus 3 execute the list display process according to the communication between the apparatuses via the network 2. In the list display process illustrated in FIG. 8, the TV receiver 1 displays the first content list of content data on the screen (display 107), and the mobile apparatus 3 displays the second content list including content data corresponding to items following the range of items of the first content list, which are displayed on the screen. The procedures of the respective processes in the TV receiver 1 and mobile apparatus 3 will be described below.

To start with, the command transmission module 38 of the mobile apparatus 3 transmits a command for displaying a content list to the TV receiver 1 (block B301). The command transmission module 38 transmits the command to the TV receiver 1 in order to acquire a content list showing content data recorded by the TV receiver 1.

Then, the response reception module 31 receives the content list data 109B and the information (display range information) indicative of a displayable range of the content list in the TV receiver 1, which have been transmitted by the response transmission module 108 of the TV receiver 1 (block B302). The information indicative of the displayable range of the content list in the TV receiver 1 indicates the range of items in the content list, which are displayed on the display 107 provided on the TV receiver 1. Thus, the information indicative of the displayable range indicates that first to fifth items in the content list, for example, are displayed on the display 107 of the TV receiver 1. The response reception module 31 outputs the received content list data 109B to the list processing module 32. The list processing module 32 stores the content list data 109B in the list data storage module 37. Using the content list data 109B and the information indicative of the displayable range of the content list in the TV receiver 1, the list processing module 32 displays a content list corresponding to the range which is not displayed on the TV receiver 1 (block B303). Specifically, the list processing module 32 generates, for example, a content list including items of a predetermined range following the range displayed on the TV receiver 1. The list processing module 32 outputs the generated content list to the display control module 33. The display control module 33 displays on the display 36 the content list which has been generated by the list processing module 32.

Then, the list processing module 32 determines whether the end of display of the content list has been selected by the user (block B304). Specifically, the list processing module 32 determines, for example, whether a request for terminating the display of the content list has been input from the input module 34 to the list processing module 32. If the end of display of the content list has been selected by the user (YES in block B304), the list processing module 32 terminates the display of the content list (block B305). Specifically, the list processing module 32 outputs to the display control module 33 a request for terminating the display of the content list. Then, the display control module 33 terminates the display of the content list on the display 36, and displays a predetermined screen.

If the end of display of the content list has not been selected by the user (NO in block B304), the list processing module 32 determines whether content has been selected by the user (block B306). Specifically, the list processing module 32 determines, for example, whether a request for selecting certain content from the displayed content list has been input from the input module 34 to the list processing module 32. If no content has been selected by the user (NO in block B306), the process returns to block B303 and continues the display of the content list.

If content has been selected by the user (YES in block B306), the list processing module 32 transmits to the TV receiver 1 a command to request playback of the selected content (block B307). Specifically, responding to the request for selecting the content, which has been output by the input module 34, the list processing module 32 generates the command to request the TV receiver 1 to play back the content. The list processing module 32 outputs the generated command to the command transmission module 38. The command transmission module 38 transmits the command, which has been generated by the list processing module 32, to the TV receiver 1.

Then, the list processing module 32 terminates the display of the content list (block B308). Specifically, the list processing module 32 outputs to the display control module 33 a request for terminating the display of the content list. The display control module 33 terminates the display of the content list on the display 36, and displays a predetermined screen.

On the other hand, the command reception module 101 of the TV receiver 1 receives the command to request the display of the content list, which has been transmitted by the command transmission module 38 of the mobile apparatus 3 (block B401). The command reception module 101 outputs the received command to the command processing module 103. The command processing module 103 processes the command, or in other words, requests the list processing module 105 to display the content list on the display 107 and to transmit the content list data 109B to the mobile apparatus 3. Responding to the request by the command processing module 103, the list processing module 105 reads the content list data 109B from the program information storage 109 (block B402). The list processing module 105 outputs the read content list data 109B to the response transmission module 108. In addition, the list processing module 105 generates information indicative of the displayable range of the content list, which is displayed on the display 107. The displayable range of the content list is, for example, a range including a predetermined number of items from the beginning of the content list. The list processing module 105 outputs the generated information indicative of the displayable range of the content list to the response transmission module 108. The response transmission module 108 transmits to the mobile apparatus 3 the content list data 109B and the information indicative of the displayable range of the content list, which have been output by the list processing module 105 (block B403).

Then, the list processing module 105 displays the content list which corresponds to the displayable range, by using the content list data 109B (block B404). Specifically, the list processing module 105 generates the content list corresponding to the displayable range, based on the information indicative of the displayable range of the content list. The list processing module 105 outputs the generated content list to the display control module 106. The display control module 106 displays on the display 107 the content list which has been generated by the list processing module 105.

Then, the list processing module 105 determines whether the end of display of the content list has been selected by the user (block B405). Specifically, the list processing module 105 determines, for example, whether a request for terminating the display of the content list has been input from the input module 102 to the list processing module 105. If the end of display of the content list has been selected by the user (YES in block B405), the list processing module 105 terminates the display of the content list (block B406). Specifically, the list processing module 105 outputs to the display control module 106 a request for terminating the display of the content list. Then, the display control module 106 terminates the display of the content list on the display 107, and displays a predetermined screen.

If the end of display of the content list has not been selected by the user (NO in block B405), the command reception module 101 receives the command to request the playback of the content, which has been transmitted by the mobile apparatus 3 (block B407). The command reception module 101 outputs the received command to the command processing module 103. The command processing module 103 processes the command, or in other words, outputs to the content processing module 104 the command to request the playback of the designated content.

The content processing module 104 determines whether a command to request playback of content has been received (block B408). If the command to request the playback of content has not been received (NO in block B408), the content processing module 104 determines whether content has been selected by the user (block B409). Specifically, the content processing module 104 determines, for example, whether a request for selecting certain content from the displayed content list has been output to the content processing module 104. If no content has been selected by the user (NO in block B409), the process returns to block B404 and continues the display of the content folder.

If the command to request the playback of the content has been received (YES in block B408) or if content has been selected by the user (YES in block B409), the list processing module 105 terminates the display of the content list (block B410). Specifically, the list processing module 105 outputs to the display control module 106 a request for terminating the display of the content list. The display control module 106 terminates the display of the content folder on the display 107. Then, the content processing module 104 plays back the designated content (block B411). In other words, the content processing module 104 plays back the content which has been designated by the command to request the playback, or the content selected by the user. Specifically, the content processing module 104 decodes the content data corresponding to the designated (selected) content, and generates a video signal. The content processing module 104 outputs the generated video signal to the display control module 106. Using the video signal generated by the content processing module 104, the display control module 106 displays the video of the designated content on the display 107.

By the above-described process, the TV receiver 1 displays the first content list on the display 107, and the mobile apparatus 3 displays the second content list including contents corresponding to items in the range following the range of items of the first content list, which are displayed on the screen. Since the user can visually recognize, at a time, the first content list and second content list showing different contents, the user can easily find the content to be viewed. The TV receiver 1 plays back the content designated by using the first content list or second content list.

As has been described above, according to the present embodiment, content data that is to be viewed can easily be found by using a plurality of screens. In the embodiment, the TV receiver 1 and mobile apparatus 3 display content lists including different contents. For example, the second content list having the structure, which is different from the folder structure of the first content list displayed on the screen of the TV receiver 1, is displayed on the screen of the mobile apparatus 3. Thereby, based on an axis which is different from the folder structure of the content list displayed on one of the apparatuses, the user can find a program that is to be viewed from the content list displayed on the other apparatus. In addition, in the embodiment, the items following the items (contents) in the content list displayed on one apparatus are displayed as the content list of the other apparatus. Further, a scroll operation on the content list displayed on one apparatus is reflected on the content list displayed on the other apparatus, whereby the two content lists are simultaneously scrolled. Since the items in the range which cannot be displayed on the screen of one apparatus are displayed on the screen of the other apparatus, the user can visually recognize a greater number of items at a time, and therefore the user can easily find the program that is to be viewed.

In the embodiment, as one example of the method of generating the second content list, such a method has been described that a list including contents corresponding to the items in the range following the range of items of the first content list displayed on the screen is generated as the second content list. However, it is possible to generate, as the second content list, a list including contents corresponding to the items in the range which at least precedes or follows the range of items of the first content list displayed on the screen.

All the procedures of the list display process in this embodiment may be executed by software. Thus, the same advantageous effects as with the present embodiment can easily be obtained simply by installing a computer program, which executes the procedures of the list display process, into an ordinary computer (a mobile phone, a PDA, a personal computer, etc.) through a computer-readable storage medium.

## Claims

1. An electronic apparatus for controlling a video apparatus configured to display a range of items from a first content list, said first content list being a subset of a main list of information items corresponding to contents stored in a storage device accessible by the video apparatus, wherein each information item includes content attribute values for a set of attributes, comprising:
a reception module (31) configured to receive the main list of information items, information indicative of the attribute used to generate the first content list, and
display range information from the video apparatus, the display range information indicating the range of items from the first content list that is displayed on a screen of the video apparatus;
a display module (33, 36) configured to display a second content list based on the display range information, the items of the second content list corresponding to a range of items from the first content list that immediately precedes or follows the range of items from the first content list displayed on the screen of the video apparatus;
a request transmission module (38) configured to transmit a playback command to the video apparatus, the playback command requesting playback of a content designated by using the second content list;
a detection module (34) configured to detect a scroll operation of scrolling items displayed on the display module; and
a scroll command transmission module (38) configured to transmit a scroll command to the video apparatus when the scroll operation is detected, the scroll command being for scrolling the range of items from the first content list displayed on the video apparatus by an amount of movement of the items corresponding to the scroll operation.

2. The electronic apparatus of Claim 1, further comprising a scroll command reception module (31) configured to receive a scroll command for scrolling items in the second content list from the video apparatus,
wherein the display module (33, 36) is configured to scroll the second content list by an amount of movement of the items indicated in the scroll command, and to display the scrolled second content list.

3. The electronic apparatus of Claim 1, wherein the reception module (31) is configured to receive the main list via a local area network, and
the request transmission module (38) is configured to transmit the playback command via the local area network.

4. An information processing method of controlling a video apparatus by using an electronic apparatus, the video apparatus being configured to display a range of items from a first content list, said first content list being a subset of a main list of information items corresponding to contents stored in a storage device accessible by the video apparatus, wherein each information item includes content attribute values for a set of attributes, the method comprising:
receiving the main list of information items,
information indicative of the attribute used to generate the first content list, and display range information from the video apparatus, the display range information indicating the range of items from the first content list that is displayed on a screen of the video apparatus;
displaying a second content list on a display module of the electronic apparatus based on the display range information, the items of the second content list corresponding to a range of items from the first content list that immediately precedes or follows the range of items from the first content list displayed on the screen of the video apparatus;
transmitting a playback command to the video apparatus, the playback command requesting playback of a content designated by using the second content list;
detecting a scroll operation of scrolling items displayed on the display module; and
transmitting a scroll command to the video apparatus if the scroll operation is detected, the scroll command being for scrolling the range of items from the first content list displayed on the video apparatus by an amount of movement of the items corresponding to the scroll operation.

5. A program for causing a computer to control a video apparatus, the video apparatus being configured to display a range of items from a first content list, said first content list being a subset of a main list of information items corresponding to contents stored in a storage device accessible by the video apparatus, wherein each information item includes content attribute values for a set of attributes, the program comprising programs code parts arranged for causing the computer to execute:
receiving the main list of information items, information indicative of the attribute used to generate the first content list, and display range information from the video apparatus, and the display range information indicating the range of items from the first content list that is displayed on a screen of the video apparatus;
displaying a second content list on a display module of the electronic apparatus based on the display range information, the items of the second content list corresponding to a range of items from the first content list that immediately precedes or follows the range of items from the first content list displayed on the screen of the video apparatus;
transmitting a playback command to the video apparatus, the playback command requesting playback of a content designated by using the second content list;
detecting a scroll operation of scrolling items displayed on the display module; and
transmitting a scroll command to the video apparatus if the scroll operation is detected, the scroll command being for scrolling the range of items from the first content list displayed on the video apparatus by an amount of movement of the items corresponding to the scroll operation.

## Patentansprüche

1. Elektronisches Gerät zum Steuern eines Videogeräts, das konfiguriert ist, um eine Auswahl von Elementen aus einer ersten Inhaltsliste anzuzeigen, wobei die erste Inhaltsliste eine Teilmenge einer Hauptliste mit Informationselementen ist, die dem Inhalt entsprechen, der in einer Speichervorrichtung gespeichert ist, die für das Videogerät zugänglich ist, wobei jedes Informationselement Inhaltsattributwerte für einen Satz von Attributen umfasst, umfassend:
- ein Empfangsmodul (31), das konfiguriert ist, um die Hauptliste mit Informationselementen, Informationen, die das Attribut angeben, das verwendet wird, um die erste Inhaltsliste zu generieren, und Anzeigeauswahlinformationen von dem Videogerät zu empfangen, wobei die Anzeigeauswahlinformationen die Auswahl von Elementen aus der ersten Inhaltsliste angeben, die auf einem Bildschirm des Videogeräts angezeigt wird;
- ein Anzeigemodul (33, 36), das konfiguriert ist, um eine zweite Inhaltsliste basierend auf den Anzeigeauswahlinformationen anzuzeigen, wobei die Elemente der zweiten Inhaltsliste einer Auswahl von Elementen aus der ersten Inhaltsliste entsprechen, die genau vor oder nach der Auswahl von Elementen aus der ersten Inhaltsliste kommt, die auf dem Bildschirm des Videogeräts angezeigt wird;
- ein Anfrageübertragungsmodul (38), das konfiguriert ist, um einen Abspielbefehl an das Videogerät zu übertragen, wobei der Abspielbefehl das Abspielen eines Inhalts anfragt, der unter Verwendung der zweiten Inhaltsliste bezeichnet wird;
- ein Detektionsmodul (34), das konfiguriert ist, um einen Ablaufvorgang des Ablaufenlassens von Elementen, die auf dem Anzeigemodul angezeigt werden, zu ermitteln; und
- ein Ablaufbefehl-Übertragungsmodul (38), das konfiguriert ist, um einen Ablaufbefehl an das Videogerät zu übertragen, wenn der Ablaufvorgang ermittelt wird, wobei der Ablaufbefehl dazu dient, die Auswahl von Elementen aus der ersten Inhaltsliste, die auf dem Videogerät angezeigt wird, um einen Bewegungsbetrag der Elemente, der dem Ablaufvorgang entspricht, ablaufen zu lassen.

2. Elektronisches Gerät nach Anspruch 1, ferner umfassend ein Ablaufbefehl-Empfangsmodul (31), das konfiguriert ist, um einen Ablaufbefehl zu empfangen, um Elemente in der zweiten Inhaltsliste von dem Videogerät ablaufen zu lassen,
wobei das Anzeigemodul (33, 36) konfiguriert ist, um die zweite Inhaltsliste um einen Bewegungsbetrag der Elemente, der in dem Ablaufbefehl angegeben wird, ablaufen zu lassen, und um die abgelaufene zweite Inhaltsliste anzuzeigen.

3. Elektronisches Gerät nach Anspruch 1, wobei das Empfangsmodul (31) konfiguriert ist, um die Hauptliste über ein lokales Netzwerk zu empfangen, und
das Anfrageübertragungsmodul (38) konfiguriert ist, um den Abspielbefehl über das lokale Netzwerk zu übertragen.

4. Informationsverarbeitungsverfahren zum Steuern eines Videogeräts unter Verwendung eines elektronischen Geräts, wobei das Videogerät konfiguriert ist, um eine Auswahl von Elementen aus einer ersten Inhaltsliste anzuzeigen, wobei die erste Inhaltsliste eine Teilmenge einer Hauptliste mit Informationselementen ist, die dem Inhalt entsprechen, der in einer Speichervorrichtung gespeichert ist, die für das Videogerät zugänglich ist, wobei jedes Informationselement Inhaltsattributwerte für einen Satz von Attributen umfasst, wobei das Verfahren folgende Schritte umfasst:
- Empfangen der Hauptliste mit
Informationselementen, von Informationen, die das Attribut angeben, das verwendet wird, um die erste Inhaltsliste zu generieren, und von Anzeigeauswahlinformationen von dem Videogerät, wobei die Anzeigeauswahlinformationen die Auswahl von Elementen aus der ersten Inhaltsliste angeben, die auf einem Bildschirm des Videogeräts angezeigt wird;
- Anzeigen einer zweiten Inhaltsliste auf einem Anzeigemodul des elektronischen Geräts basierend auf den Anzeigeauswahlinformationen, wobei die Elemente der zweiten Inhaltsliste einer Auswahl von Elementen aus der ersten Inhaltsliste entsprechen, die genau vor oder nach der Auswahl von Elementen aus der ersten Inhaltsliste kommt, die auf dem Bildschirm des Videogeräts angezeigt wird;
- Übertragen eines Abspielbefehls an das Videogerät, wobei der Abspielbefehl das Abspielen eines Inhalts anfragt, der unter Verwendung der zweiten Inhaltsliste bezeichnet wird;
- Ermitteln eines Ablaufvorgangs des Ablaufenlassens von Elementen, die auf dem Anzeigemodul angezeigt werden; und
- Übertragen eines Ablaufbefehls an das Videogerät, wenn der Ablaufvorgang ermittelt wird, wobei der Ablaufbefehl dazu dient, die Auswahl von Elementen aus der ersten Inhaltsliste, die auf dem Videogerät angezeigt wird, um einen Bewegungsbetrag der Elemente, der dem Ablaufvorgang entspricht, ablaufen zu lassen.

5. Programm zum Bewirken, dass ein Computer ein Videogerät steuert, wobei das Videogerät konfiguriert ist, um eine Auswahl von Elementen aus einer ersten Inhaltsliste anzuzeigen, wobei die erste Inhaltsliste eine Teilmenge einer Hauptliste mit Informationselementen ist, die dem Inhalt entsprechen, der in einer Speichervorrichtung gespeichert ist, die für das Videogerät zugänglich ist, wobei jedes Informationselement Inhaltsattributwerte für einen Satz von Attributen umfasst, wobei das Programm Programmcodeteile umfasst, die angeordnet sind, um zu bewirken, dass der Computer folgende Schritte ausführt:
- Empfangen der Hauptliste mit Informationselementen, von Informationen, die das Attribut angeben, das verwendet wird, um die erste Inhaltsliste zu generieren, und von Anzeigeauswahlinformationen von dem Videogerät, wobei die Anzeigeauswahlinformationen die Auswahl von Elementen aus der ersten Inhaltsliste angeben, die auf einem Bildschirm des Videogeräts angezeigt wird;
- Anzeigen einer zweiten Inhaltsliste auf einem Anzeigemodul des elektronischen Geräts basierend auf den Anzeigeauswahlinformationen, wobei die Elemente der zweiten Inhaltsliste einer Auswahl von Elementen aus der ersten Inhaltsliste entsprechen, die genau vor oder nach der Auswahl von Elementen aus der ersten Inhaltsliste kommt, die auf dem Bildschirm des Videogeräts angezeigt wird;
- Übertragen eines Abspielbefehls an das Videogerät, wobei der Abspielbefehl das Abspielen eines Inhalts anfragt, der unter Verwendung der zweiten Inhaltsliste bezeichnet wird;
- Ermitteln eines Ablaufvorgangs des Ablaufenlassens von Elementen, die auf dem Anzeigemodul angezeigt werden; und
- Übertragen eines Ablaufbefehls an das Videogerät, wenn der Ablaufvorgang ermittelt wird, wobei der Ablaufbefehl dazu dient, die Auswahl von Elementen aus der ersten Inhaltsliste, die auf dem Videogerät angezeigt wird, um einen Bewegungsbetrag der Elemente, der dem Ablaufvorgang entspricht, ablaufen zu lassen.

## Revendications

1. Dispositif électronique pour commander un appareil vidéo configuré pour afficher une plage d'éléments d'une première liste de contenus, ladite première liste de contenus étant un sous-ensemble d'une liste principale d'éléments d'information correspondant à des contenus enregistrés dans un dispositif de mémorisation accessible par l'appareil vidéo, dans lequel chaque élément d'information comporte des valeurs d'attribut de contenu pour un ensemble d'attributs, comprenant :
un module de réception (31) configuré pour recevoir la liste principale d'éléments d'information, des informations représentant l'attribut utilisé pour générer la première liste de contenu, et des informations de plage d'affichage depuis l'appareil vidéo, les informations de plage d'affichage indiquant la plage des éléments de la première liste de contenus qui est affichée sur l'écran de l'appareil vidéo ;
un module d'affichage (33, 36) configuré pour afficher une seconde liste de contenus en se basant sur les informations de plage d'affichage, les éléments de la seconde liste de contenus correspondant à une plage d'éléments de la première liste de contenus qui précède ou suit immédiatement la plage d'éléments de la première liste de contenus affichée sur l'écran de l'appareil vidéo ;
un module de transmission de demande (38) configuré pour transmettre une commande de lecture à l'appareil vidéo, la commande de lecture demandant la lecture d'un contenu désigné en utilisant la seconde liste de contenus ;
un module de détection (34) configuré pour détecter une opération de défilement pour faire défiler les éléments affichés sur le module d'affichage ; et
un module de transmission de commande de défilement (38) configuré pour transmettre une commande de défilement à l'appareil vidéo lorsque l'opération de défilement est détectée, la commande de défilement étant destinée à faire défiler la plage d'éléments de la première liste de contenus affichée sur l'appareil vidéo d'une quantité de mouvement des éléments correspondant à l'opération de défilement.

2. Dispositif électronique selon la revendication 1, comprenant en outre un module de réception de commande de défilement (31) configuré pour recevoir une commande de défilement pour faire défiler les éléments de la seconde liste de contenus depuis l'appareil vidéo,
dans lequel le module d'affichage (33, 36) est configuré pour faire défiler la seconde liste de contenus d'une quantité de mouvement des éléments indiquée dans la commande de défilement et pour afficher la seconde liste de contenus que l'on a fait défiler.

3. Dispositif électronique selon la revendication 1, dans lequel le module de réception (31) est configuré pour recevoir la liste principale par l'intermédiaire d'un réseau local, et
le module de transmission de demande (38) est configuré pour transmettre la commande de lecture par l'intermédiaire du réseau local.

4. Procédé de traitement d'informations pour commander un appareil vidéo en utilisant un dispositif électronique, l'appareil vidéo étant configuré pour afficher une plage d'éléments d'une première liste de contenus, ladite première liste de contenus étant un sous-ensemble d'une liste principale d'éléments d'information correspondant à des contenus enregistrés dans un dispositif de mémorisation accessible par l'appareil vidéo, dans lequel chaque élément d'information comporte des valeurs d'attribut de contenu pour un ensemble d'attributs, le procédé comprenant :
la réception de la liste principale d'éléments d'information, d'informations représentant l'attribut utilisé pour générer la première liste de contenu, et d'informations de plage d'affichage depuis l'appareil vidéo, les informations de plage d'affichage indiquant la plage des éléments de la première liste de contenus qui est affichée sur l'écran de l'appareil vidéo ;
l'affichage d'une seconde liste de contenus sur un module d'affichage du dispositif électronique, en se basant sur les informations de plage d'affichage, les éléments de la seconde liste de contenus correspondant à une plage d'éléments de la première liste de contenus qui précède ou suit immédiatement la plage d'éléments de la première liste de contenus affichée sur l'écran de l'appareil vidéo ;
la transmission d'une commande de lecture à l'appareil vidéo, la commande de lecture demandant la lecture d'un contenu désigné en utilisant la seconde liste de contenus ;
la détection d'une opération de défilement d'éléments de défilement affichés sur le module d'affichage ; et
la transmission d'une commande de défilement à l'appareil vidéo si l'opération de défilement est détectée, la commande de défilement étant destinée à faire défiler la plage d'éléments de la première liste de contenus affichée sur l'appareil vidéo d'une quantité de mouvement des éléments correspondant à l'opération de défilement.

5. Programme pour faire commander un appareil vidéo par un ordinateur, l'appareil vidéo étant configuré pour afficher une plage d'éléments d'une première liste de contenus, ladite première liste de contenus étant un sous-ensemble d'une liste principale d'éléments d'information correspondant à des contenus enregistrés dans un dispositif de mémorisation accessible par l'appareil vidéo, dans lequel chaque élément d'information comporte des valeurs d'attribut de contenu pour un ensemble d'attributs, le programme comprenant des parties de code de programme pour faire effectuer par l'ordinateur :
la réception de la liste principale d'éléments d'information, d'informations représentant l'attribut utilisé pour générer la première liste de contenu, et d'informations de plage d'affichage depuis l'appareil vidéo, et les informations de plage d'affichage indiquant la plage des éléments de la première liste de contenus qui est affichée sur l'écran de l'appareil vidéo ;
l'affichage d'une seconde liste de contenus sur un module d'affichage du dispositif électronique, en se basant sur les informations de plage d'affichage, les éléments de la seconde liste de contenus correspondant à une plage d'éléments de la première liste de contenus qui précède ou suit immédiatement la plage d'éléments de la première liste de contenus affichée sur l'écran de l'appareil vidéo ;
la transmission d'une commande de lecture à l'appareil vidéo, la commande de lecture demandant la lecture d'un contenu désigné en utilisant la seconde liste de contenus ;
la détection d'une opération de défilement d'éléments de défilement affichés sur le module d'affichage ; et
la transmission d'une commande de défilement à l'appareil vidéo si l'opération de défilement est détectée, la commande de défilement étant destinée à faire défiler la plage d'éléments de la première liste de contenus affichée sur l'appareil vidéo d'une quantité de mouvement des éléments correspondant à l'opération de défilement.
